# FASCICULE DE BREVET EUROPEEN

(11) **EP 3 310 642 B1**
(45) Date de publication et mention de la délivrance du brevet: **05.08.2020**
(21) Numéro de dépôt: 16730702.4
(22) Date de dépôt: 01.06.2016
(51) Int. Cl.: B62D 25/08, B62D 29/00

(54) **STRUCTURE DE SUPPORT POUR UN MODULE DE FACE AVANT D'UN VEHICULE AUTOMOBILE ET MODULE DE FACE AVANT COMPRENANT LADITE STRUCTURE DE SUPPORT**
TRAGSTRUKTUR FÜR EIN FRONTENDMODUL EINES KRAFTFAHRZEUGS UND FRONTENDMODUL MIT DER TRÄGERSTRUKTUR
SUPPORTING STRUCTURE FOR A FRONT-END MODULE OF A MOTOR VEHICLE AND FRONT-END MODULE COMPRISING SAID SUPPORTING STRUCTURE

(30) Priorité: 22.06.2015 FR 1555685
(43) Date de publication de la demande: 25.04.2018
(73) Titulaire: Valeo Systemes Thermiques, 78320 Le Mesnil-Saint-Denis (FR)
(72) Inventeur: VELASCO, Sébastien, 78280 Guyancourt (FR)
(74) Mandataire: Tran, Chi-Hai
(86) Numéro de dépôt international: PCT/EP2016/062422
(87) Numéro de publication internationale: WO 2016/206936

(56) Documents cités:
- EP-A1- 1 036 729
- EP-A2- 2 284 066
- DE-A1-102011 016 936
- FR-A1- 2 783 794
- FR-A1- 3 014 813
- US-A1- 2007 139 940

## Description

### Domaine de l'invention

La présente invention concerne un module de face avant pour un véhicule automobile et, plus précisément, une structure de support adaptée pour ledit module de face avant.

### Etat de la technique

De manière générale, au sein d'un véhicule automobile, un module de face avant est un élément structurel destiné à contenir une pluralité de dispositifs nécessaires au fonctionnement du véhicule automobile, tels que des projecteurs ou des échangeurs thermiques. A l'issue de la production d'un module de face avant, celui-ci peut être directement assemblé sur le véhicule automobile, notamment avec des éléments du châssis du véhicule automobile, tels que les longerons. Le module de face avant peut être également monté sur le véhicule automobile par assemblage avec un pare-chocs ou un bouclier frontal.

De manière connue, le module de face avant comporte une structure de support destinée à recevoir les dispositifs nécessaires au fonctionnement du véhicule automobile et une poutre pare-chocs pour protéger lesdits dispositifs lors d'une collision frontale entre un piéton et le véhicule automobile. La structure de support du module de face avant comprend différentes pièces fixées ensemble. Ainsi, la structure de support comprend une traverse inférieure, des montants latéraux pour ladite traverse inférieure, une traverse supérieure adaptée pour être fixée au sommet des montants latéraux et des bras de renfort fixés aux extrémités de la traverse supérieure et/ou sur les montants latéraux.

De manière générale, une telle structure de support est entièrement réalisée dans un matériau résistant, tel que l'acier, afin d'être conforme aux normes imposées par la réglementation en matière de sécurité automobile lors d'une collision frontale entre un piéton et un véhicule automobile. Cependant, une telle structure de support représente un poids non négligeable au sein du véhicule automobile ce qui engendre une consommation élevée de carburant et un niveau élevé d'émission de dioxyde de carbone (CO2).
Le document EP 1 036 729 A1 décrit une structure de support selon le préambule de la revendication 1.

Par conséquent, il s'avère nécessaire d'améliorer la conception d'une structure de support d'un module de face avant selon l'état de l'art afin d'optimiser le fonctionnement du véhicule automobile, tout en respectant les normes relatives à la réglementation en matière de sécurité automobile.

### Objet de l'invention

Le support de module de face avant et le module de face avant comprenant ledit support selon la présente invention, visent à remédier aux inconvénients mentionnés ci-dessus.

Ainsi, un premier objet de l'invention concerne une structure de support pour un module de face avant d'un véhicule automobile, ladite structure de support comprenant une traverse inférieure, un premier montant latéral, un deuxième montant latéral et une traverse supérieure de manière à définir un cadre, ladite traverse supérieure étant formée d'un matériau hybride comprenant un matériau plastique et un matériau métallique. En d'autres termes, les montants sont agencés de manière à relier les traverses entre elles.

De manière avantageuse, la traverse supérieure comprend un insert réalisé dans un matériau métallique et recouvert d'un matériau plastique

Selon l'invention, la structure de support comprend une aile de support fixée à une extrémité de la traverse supérieure.

De manière avantageuse, l'aile de support est réalisée dans un matériau métallique.

Selon l'invention, la structure de support comprend une pièce de support pour connecter ladite aile de support à la structure de support.

Toujours selon l'invention, la pièce de support comprend un insert réalisé dans un matériau hybride comprenant un matériau plastique et un matériau métallique.

Un deuxième objet de l'invention concerne un module de face avant comprenant une structure de support selon les caractéristiques ci-dessus.

### Brève description des dessins

Les but, objet et caractéristiques de la présente invention ainsi que ses avantages, apparaîtront plus clairement à la lecture de la description qui suit, des modes de réalisation préférés selon l'invention, faite en référence aux dessins dans lesquels :
- la figure 1 montre, une vue éclatée et en perspective d'une structure de support pour un module de face avant, selon un premier mode de réalisation de l'invention,
- la figure 2 montre, une vue assemblée et en perspective de la structure de support selon la figure 1,
- la figure 3 montre, une vue de face de la structure de support selon la figure 1,
- la figure 4 montre, une vue de face d'une aile de support fixée à une partie de la structure de support du module de face, avant selon un mode de réalisation de la présente invention.

### Description détaillée des modes de réalisation

La description détaillée ci-après a pour but d'exposer l'invention de manière suffisamment claire et complète, notamment à l'aide d'exemples, mais ne doit pas être considérée comme limitant l'étendue de la protection aux modes de réalisation particuliers et aux exemples présentés ci-après.

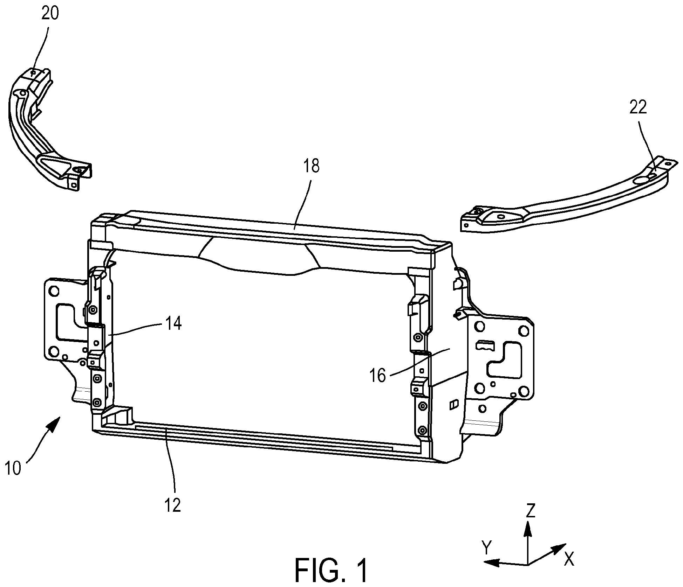

La figure 1 montre, une structure de support 10 pour un module de face avant (non montré) d'un véhicule automobile. La structure de support 10 comprend une traverse inférieure 12, un premier montant latéral 14, un deuxième montant latéral 16 et une traverse supérieure 18 assemblés au moyen de connexions, telles que des vis, pour former une structure fermée. La traverse inférieure 12, le premier montant latéral 14 et le deuxième montant latéral 16 sont entièrement réalisés dans un matériau plastique, tel que du polypropylène renforcé par des fibres de verre longues à 40%. Ainsi, la structure de support 10 est relativement plus légère qu'une structure de support selon l'art antérieur. La traverse supérieure 18 comprend un insert (non montré) de forme tubulaire, par exemple, réalisé dans un matériau métallique, tel que l'acier, et recouvert, à l'issue d'un procédé de surmoulage, d'un matériau plastique tel que du polypropylène renforcé par des fibres de verre longues à 40%. La traverse supérieure 18 comprend donc un matériau hybride formé d'un matériau métallique et d'un matériau plastique. Les dimensions de l'insert sont déterminées de sorte que le niveau de rigidité et de résistance de la structure de support 10 est conforme aux normes imposées par la réglementation en matière de sécurité automobile lors d'une collision frontale entre un véhicule automobile et un piéton. L'insert peut constituer soit la totalité, soit une partie de la traverse supérieure 18. L'insert ainsi intégré au sein de la traverse supérieure 18 réalise également une fonction de plaque de renfort pour éviter l'ouverture intempestive du capot du véhicule automobile lors d'un choc frontal du véhicule automobile avec un piéton. La structure de support 10 comprend également une première aile de support 20 et une deuxième aile de support 22 montrées sur la figure 1. La première et la deuxième aile de support 20, 22 sont adaptées pour être connectées à chaque extrémité de la traverse supérieure 18 au moyen de connexions telles que des vis. La première et la deuxième aile de support 20, 22 peuvent être formées au moyen d'un procédé d'emboutissage, dans un matériau tel que l'aluminium ou l'acier.

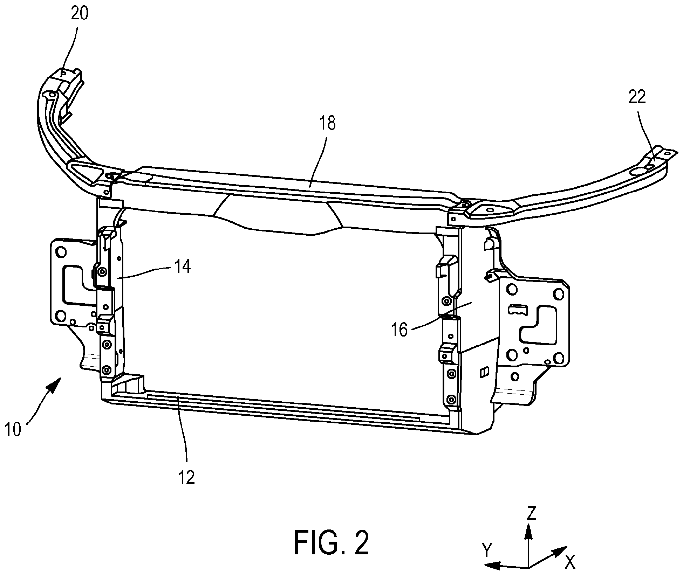

La figure 2 montre la structure de support 10 selon le premier mode de réalisation de l'invention, avec la première et la deuxième aile de support 20, 22 assemblées sur la traverse supérieure 18.

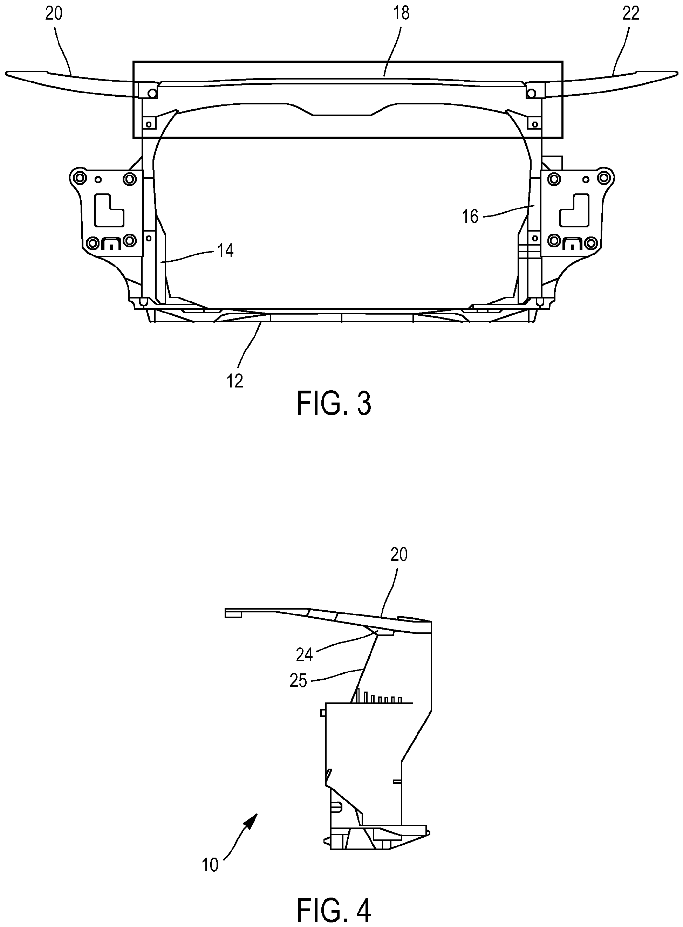

La figure 3 montre une vue de face de la structure de support 10 assemblée avec la première et la deuxième aile de support 20, 22.

La figure 4 montre en détail la connexion de la première aile de support 20, montrée sur les figures 1, 2 et 3, sur une portion de la structure de support 10 (partiellement montrée). Comme montré sur la figure 4, la première aile de support 20 peut comprendre, une pièce de support 24, afin de connecter ladite première aile de support 20 à la structure de support 10 au moyen d'un élément de liaison 25. La pièce de support 24 peut être réalisée au moyen d'un insert réalisé dans un matériau métallique et recouvert, à l'issue d'un procédé de surmoulage, d'une matière plastique.

La deuxième aile de support 22 est connectée à la structure de support 10, de manière similaire à la première aile de support 20, au moyen d'une pièce de support (non montrée) et d'un élément de liaison (non montré).

Ainsi, la structure de support 10 peut comprendre, d'une part, un insert métallique localisé au sein de la traverse supérieure 18 et, d'autre part, un insert métallique localisé dans la pièce de support 24 pour la connexion de la première aile de support 20 et un insert métallique localisé dans la pièce de support de la deuxième aile de support 22. Ainsi la présence de l'ensemble des inserts métalliques garantit un niveau de rigidité et de résistance de la structure de support 10 d'une part, au niveau de la traverse supérieure 18 et, d'autre part, au niveau de la fixation de la première et deuxième aile de support 20, 22.

La structure de support 10 ainsi constituée représente un poids réduit de l'ordre de 30 à 40 % par rapport au poids d'une structure de support selon l'art antérieur. Ainsi, la structure de support 10 selon la présente invention permet de diminuer la consommation de carburant du véhicule automobile, et par conséquent, de réduire les émissions de dioxyde de carbone (CO2).

La structure de support 10 selon la présente invention permet donc de combiner une relative rigidité vis-à-vis de la protection d'un piéton en cas de choc frontal avec une relative flexibilité pour absorber les éventuelles vibrations subies par les dispositifs au sein du module de la face avant lorsque le véhicule automobile est en déplacement. De plus, une structure de support selon l'invention nécessite un nombre limité d'étapes lors de sa fabrication par comparaison avec le nombre d'étapes nécessaires pour fabriquer une structure de support entièrement métallique selon l'état de l'art.

## Revendications

1. Structure de support (10) pour un module de face avant d'un véhicule automobile, ladite structure de support (10) comprenant une traverse inférieure (12), un premier montant latéral (14), un deuxième montant latéral (16) et une traverse supérieure (18) de manière à définir un cadre, ladite traverse supérieure (18) étant formée d'un matériau hybride comprenant un matériau plastique et un matériau métallique ladite structure de support (10) comprenant une aile de support (20, 22) fixée à une extrémité de la traverse supérieure (18), ladite structure de support (10) comprenant une pièce de support (24) pour connecter l'aile de support (20, 22) à la structure de support (10) **caractérisé en ce que** la pièce de support (24) comprend un insert réalisé dans un matériau hybride comprenant un matériau plastique et un matériau métallique.

2. Structure de support (10) selon la revendication 1, dans laquelle la traverse supérieure (18) comprend un insert réalisé dans un matériau métallique et recouvert d'un matériau plastique.

3. Structure de support (10) selon la revendication 1 ou 2, l'aile de support (20, 22) étant réalisée dans un matériau métallique.

4. Module de face avant comprenant une structure de support (10) selon l'une des revendications précédentes.

## Patentansprüche

1. Stützstruktur (10) für ein Frontendmodul eines Kraftfahrzeugs, wobei die Stützstruktur (10) einen unteren Querträger (12), eine erste seitliche Säule (14), eine zweite seitliche Säule (16) und einen oberen Querträger (18) umfasst, um einen Rahmen zu definieren, wobei der obere Querträger (18) aus einem Hybridmaterial gebildet ist, das ein Kunststoffmaterial und ein metallisches Material umfasst, wobei die Stützstruktur (10) einen Stützflügel (20, 22) umfasst, der an einem Ende des oberen Querträgers (18) befestigt ist, wobei die Stützstruktur (10) ein Stützteil (24) umfasst, um den Stützflügel (20, 22) mit der Stützstruktur (10) zu verbinden, **dadurch gekennzeichnet, dass** das Stützteil (24) einen Einsatz umfasst, der aus einem Hybridmaterial hergestellt ist, das ein Kunststoffmaterial und ein metallisches Material umfasst.

2. Stützstruktur (10) nach Anspruch 1, wobei der obere Querträger (18) einen Einsatz umfasst, der aus einem metallischen Material hergestellt und mit einem Kunststoffmaterial überzogen ist.

3. Stützstruktur (10) nach Anspruch 1 oder 2, wobei der Stützflügel (20, 22) aus einem metallischen Material hergestellt ist.

4. Frontendmodul, umfassend eine Stützstruktur (10) nach einem der vorhergehenden Ansprüche.

## Claims

1. Supporting structure (10) for a motor vehicle front end module, the said supporting structure (10) comprising a lower crossmember (12), a first lateral upright (14), a second lateral upright (16) and an upper crossmember (18) so as to define a frame, the said upper crossmember (18) being formed from a hybrid material containing a plastics material and a metallic material, the said supporting structure (10) comprising a supporting wing (20, 22) fixed to one end of the upper crossmember (18), the said supporting structure (10) comprising a supporting piece (24) for connecting the supporting wing (20, 22) to the supporting structure (10), **characterized in that** the supporting piece (24) comprises an insert made from a hybrid material containing a plastics material and a metallic material.

2. Supporting structure (10) according to Claim 1, in which the upper crossmember (18) comprises an insert made from a metallic material and covered in a plastics material.

3. Supporting structure (10) according to Claim 1 or 2, the supporting wing (20, 22) being made from a metallic material.

4. Front end module comprising a supporting structure (10) according to one of the preceding claims.
